# EUROPEAN PATENT SPECIFICATION

(11) **EP 3 863 560 B1**
(45) Date of publication and mention of the grant of the patent: **12.06.2024**
(21) Application number: 19794430.9
(22) Date of filing: 10.10.2019
(51) Int. Cl.: A61C 17/02

(54) **NOZZLE HEADS FOR A CLEANING DEVICE USING LIQUID SHEET CLEANING ACTION**
DÜSENKÖPFE FÜR EINE REINIGUNGSVORRICHTUNG MIT FLÜSSIGBLATTREINIGUNGSWIRKUNG
TÊTES DE BUSE POUR UN DISPOSITIF DE NETTOYAGE UTILISANT UNE ACTION DE NETTOYAGE À FEUILLE LIQUIDE

(30) Priority: 11.10.2018 US 201862744207 P
(43) Date of publication of application: 18.08.2021
(73) Proprietor: Koninklijke Philips N.V., 5656 AG Eindhoven (NL)
(72) Inventor: WANG, Tianyi, 5656 AE Eindhoven (NL); CHALLA, Vinod, Reddy, 5656 AE Eindhoven (NL); MILLER, Jason, Daniel, 5656 AE Eindhoven (NL); BALAKRISHNAN, Anandh, 5656 AE Eindhoven (NL); LAVEZZO, Valentina, 5656 AE Eindhoven (NL); GOTTENBOS, Bart, 5656 AE Eindhoven (NL)
(74) Representative: Philips Intellectual Property & Standards
(86) International application number: PCT/EP2019/077454
(87) International publication number: WO 2020/074631

(56) References cited:
- EP-A1- 2 505 266
- WO-A1-2016/077114
- WO-A1-2019/006403
- US-A- 1 494 809
- US-A1- 2012 160 263

## Description

### Field of the Invention

The present disclosure is directed generally to personal care devices using liquid sheet cleaning action.

### Background

WO 2016/077114 A1 discloses a nozzle and spray dispenser for generating a uniform substantially flat fan spray pattern when spraying high viscosity fluids (i.e., oils, lotions, cleaning liquids, shear-thinning liquids and gels and similar Newtonian and non-Newtonian fluids having viscosities of 10 -100 cP).

US 2012/160263 A1 discloses a spray assembly for a droplet spray teeth cleaning system.

US 1494809 A discloses a dental syringe.

EP 2505266 A1 discloses a spray nozzle and an aerosol product in which the density difference between the center and the periphery is small. WO 2019/006403 A1 discloses methods for providing personalized oral irrigation.

Proper personal hygiene can help improve health and reduce issues with disease, infection and other health issues. For example, proper tooth cleaning helps promote long-term dental health. One facet of proper tooth cleaning is the use of oral irrigators to remove dental plaque to clean gums and teeth. Oral irrigators are especially important in areas where toothbrushes cannot easily access, such as between the teeth and at the gum margin. The cleaning force of the water pressure provided by the oral irrigator or other personal care cleaning device can be problematic, as increasing the driving pressure reduces the comfort of the water jet. If a user experiences discomfort, they may discontinue use of the product; alternatively, if the water pressure is not sufficient, it will not provide adequate cleaning.

Personal care cleaning devices, such as oral irrigators typically comprise one or more rounded orifices that project a rounded stream or "jet" of water toward the surface to be cleaning. Although there are some variations on rounded orifices, the resulting jets are typically round or oval in shape.

Accordingly, there is a continued need in the art for personal care cleaning devices that exert sufficient force to remove unwanted substances, such as plaque layers from dental surfaces without being uncomfortable or dangerous for the user.

### Summary of the Invention

The invention is defined by the independent claims. The dependent claims define advantageous embodiments.

The present disclosure is directed to inventive systems for cleaning using personal care cleaning device that produces liquid sheets and liquid jets. Various embodiments and implementations herein are directed to nozzle designs for a personal care cleaning device, where the nozzle design combines both shear stress at a shallow incident angle and an impact pressure gradient at a normal incident angle in order to remove teeth plaques and improve gum health in all regions of the teeth including the front surface, marginal regions, proximal regions, and interproximal regions. The nozzle designs result in the emission of both one or more liquid sheets under pressure toward the surface to be cleaned, and one or more liquid jets exerted under pressure toward the surface. The liquid sheets are characterized as a water stream having an elongated shape, where the length is substantially longer than the width. The personal care cleaning device can be an oral irrigator configured to clean the teeth and gums, including the interproximal spaces, among other possible personal care devices.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the invention.
FIG. 1 is a schematic representation of a personal care cleaning device, in accordance with an embodiment.
FIG. 2A is a schematic representation of a nozzle of a cleaning device, in accordance with an embodiment.
FIG. 2B is a schematic representation of a nozzle of a cleaning device, in accordance with an embodiment.
FIG. 2C is a schematic representation of a nozzle head portion of a cleaning device, in accordance with an embodiment.
FIG. 2D is a side view schematic representation of a nozzle head portion of a cleaning device, in accordance with an embodiment.
FIG. 3A is a schematic representation of a nozzle head portion of a cleaning device, in accordance with an embodiment.
FIG. 3B is a side view schematic representation of a nozzle head portion of a cleaning device, in accordance with an embodiment.
FIG. 4 is a schematic representation of a nozzle head portion of a cleaning device, in accordance with an embodiment.
FIG. 5A is a schematic representation of a nozzle of a cleaning device, in accordance with an embodiment.
FIG. 5B is a schematic representation of a nozzle of a cleaning device, in accordance with an embodiment.
FIG. 6 is a schematic representation of a nozzle head portion of a cleaning device, in accordance with an embodiment.
FIG. 7A is a schematic representation of a nozzle of a cleaning device, in accordance with an embodiment.
FIG. 7B is a schematic representation of a nozzle of a cleaning device, in accordance with an embodiment.
FIG. 8A is a schematic representation of a nozzle of a cleaning device, in accordance with an embodiment.
FIG. 8B is a side view schematic representation of a nozzle head portion of a cleaning device, in accordance with an embodiment.
FIG. 8C is a side perspective view schematic representation of a nozzle head portion of a cleaning device, in accordance with an embodiment.
FIG. 8D is a front view schematic representation of a nozzle head portion of a cleaning device, in accordance with an embodiment.
FIG. 9A is a schematic representation of a nozzle of a cleaning device, in accordance with an embodiment.
FIG. 9B is a side view schematic representation of a nozzle head portion of a cleaning device, in accordance with an embodiment.
FIG. 9C is a side perspective view schematic representation of a nozzle head portion of a cleaning device, in accordance with an embodiment.
FIG. 9D is a front view schematic representation of a nozzle head portion of a cleaning device, in accordance with an embodiment.

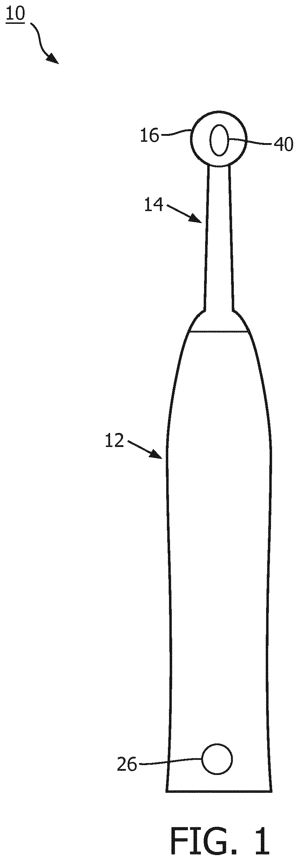

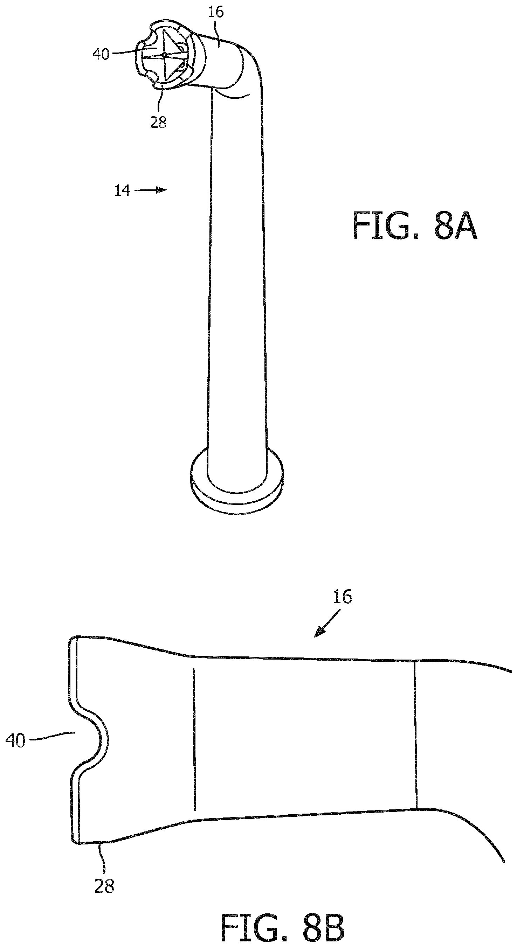

In particular, FIGS. 8A to 9D show embodiments according to the claimed invention, whereas FIGS. 1 to 7B show only isolated features of the claimed invention.

### Detailed Description of Embodiments

The present disclosure describes various embodiments of a nozzle design for a personal care device configured to emit both a liquid sheet and a liquid jet toward a surface to be cleaned. More generally, applicant has recognized and appreciated that it would be beneficial to provide a system to clean surfaces simultaneously using a liquid sheet cleaning action and a liquid jet cleaning action. Accordingly, described or otherwise envisioned herein is a nozzle design for a personal care cleaning device configured to emit one or more liquid sheets and one or more liquid jets. The nozzle comprises one or more orifices configured to emit a liquid sheet, and one or more orifices configured to simultaneously or intermittently emit a liquid jet.

The embodiments and implementations disclosed or otherwise envisioned herein can be utilized with any personal care cleaning device, including but not limited to an oral irrigator, toothbrush, a flossing device, a wound cleaning device, skin cleaning device, a device comprising both a toothbrush and an oral irrigator, or any other cleaning device. However, the disclosure is not limited to an oral irrigator and thus the disclosure and embodiments disclosed herein can encompass any personal care cleaning device.

Referring to FIG. 1, in one embodiment, is a personal care cleaning device 10 with a body portion 12 and a nozzle member 14 mounted on the body portion. Nozzle member 14 includes at its end remote from the body portion a head 16. Head 16 comprises at least one orifice 40 configured to emit liquid and/or air from the device. According to an embodiment, nozzle member 14 is configured to allow the passage of pressurized liquid and/or air from a fluid reservoir (not shown) out of the orifice 40, where it is applied to the user's oral surfaces. Nozzle member 14 can be detachably mounted onto body portion 12 such that the nozzle can periodically be replaced with a new one when a component of the device is worn out or otherwise requires replacement, such as nozzle members with varying orifices 40 for different functions.

Body portion 12 is further provided with a user input 26. The user input 26 allows a user to operate the personal care cleaning device 10, for example to turn the device on and off or initiate a cleaning session. The user input 26 may, for example, be a button, touch screen, or switch. The user input may be located on the body portion, or on another portion of the device (not shown).

A liquid sheet can be defined as a shape that has a cross-section in which the length is longer than the width. A liquid sheet embodies a higher cleaning force, which may result from a steeper pressure gradient due of the thinner dimension, combined with a two-directional outflow compared to radial outflow in round jets. Additionally, the liquid sheet has the additional advantage of a much larger treatment area over round jets as the personal care cleaning device is moved across the surface to be cleaned. When a personal care cleaning device is an oral cleaning device, the length of the one or more liquid sheets impacting the teeth is configured to approximate the height of teeth at the tooth surface, as excess length above the height of teeth would waste liquid.

According to an embodiment, nozzle 14 of personal care cleaning device 10 may comprise one, or a multiple of different orifices configured to emit a liquid for cleaning. Different orifices produce different shape morphologies, and one morphology may be more efficient at cleaning a certain type of surface versus another morphology.

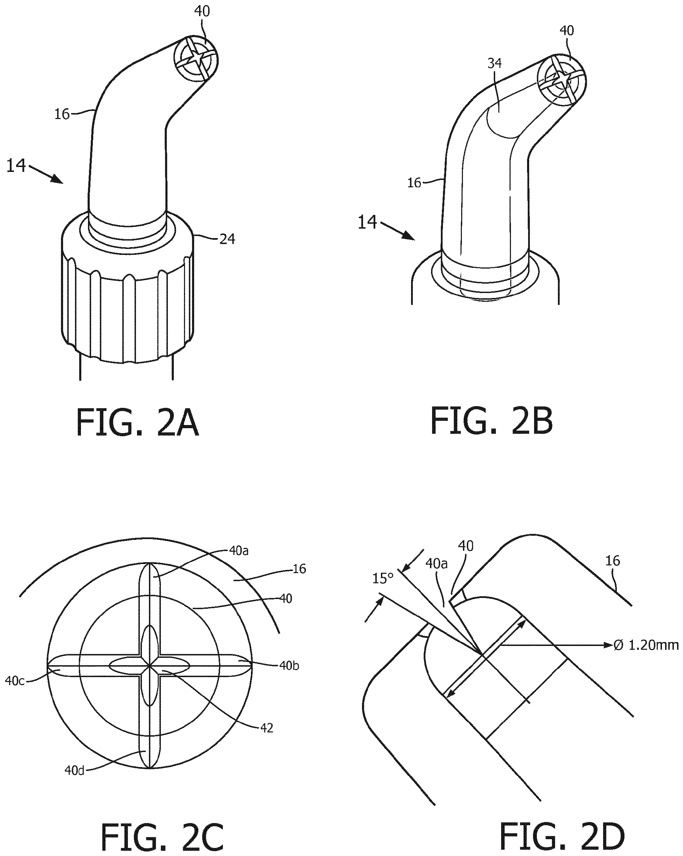

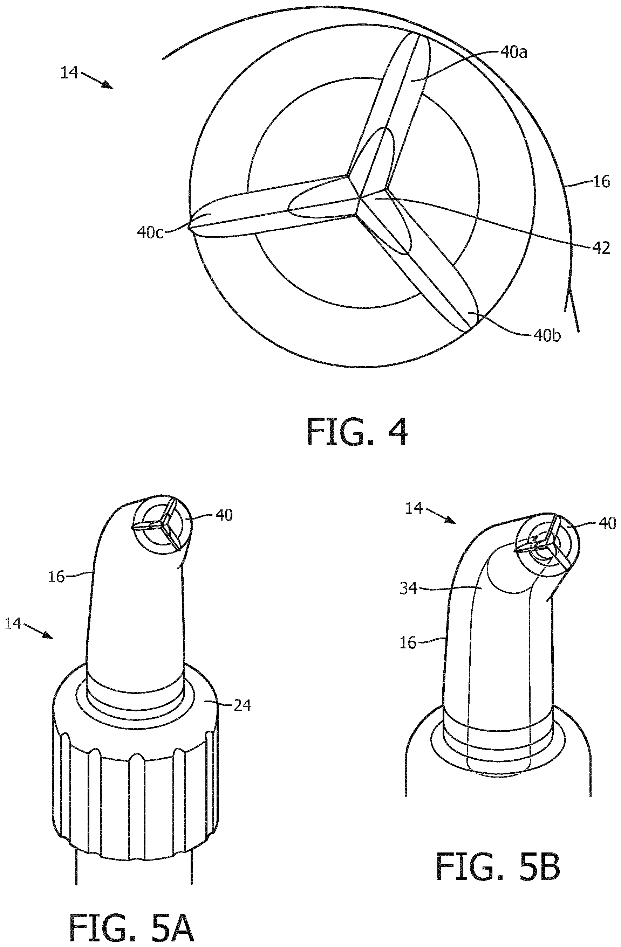

Referring to FIGS. 2A-2D, are views of one embodiment of an arrangement, showing the head portion 16 of a nozzle member 14 of a personal care cleaning device. The head portion is angled relative to the body portion, and may comprise a connection mechanism 24 configured to removably connect the nozzle member to the personal care cleaning device. The connection mechanism can be any connection mechanism, such as a snapping mechanism, screw-on mechanism, or any other connection mechanism. The tip of head portion 16 comprises at least an orifice configuration 40 configured to emit both at least one liquid jet and one or more liquid sheets from the tip for cleaning. In this embodiment, the nozzle head comprises both liquid sheet orifice 40, and a centralized orifice 42 configured to emit a liquid jet. The nozzle also comprises a hollow channel 34 configured to allow the passage of pressurized liquid and/or air from a fluid reservoir (not shown) out of the orifice 40, where it is applied to the user's dental surfaces. According to an embodiment, head 16 can be angled relative to the body portion, as shown for example in FIG. 5A.

FIG. 2C is a front view of a nozzle head 16 with an orifice 40, and FIG. 2D is a cutaway side view of the nozzle head with orifice 40. In FIG. 2C, it can be seen that the orifice 40 comprises crossing V-grooves 40a-d, each configured to emit a radial sheet and which combine to form a central orifice portion 42 configured to emit a liquid jet. Although FIG. 2C depicts a cross shape for the liquid sheet orifices and liquid jet orifice, many other configurations are possible. In FIG. 2D, the side cutaway view of the orifice 40 of FIG. 2C shows the V-groove 40a configured to emit a pressurized sheet of liquid from the liquid reservoir. According to this arrangement, the cut angle of the V-grooves is 15 degrees, although many other sizes and angles are possible. Pursuant to this embodiment, for an orifice having a 1.2 mm inside diameter, a fluid footprint measured on a user's teeth when the 0.49 mm² nozzle orifice is held 3 mm away from the teeth, comprises a jet with a diameter of 0.45±0.15 mm, a sheet length of 2.4±0.3 mm, and a sheet thickness 65±30 µm. These measurements can be varied by changing the cut angle of the V-grooves, the size of the jet orifice, the distance from the teeth, and other variables.

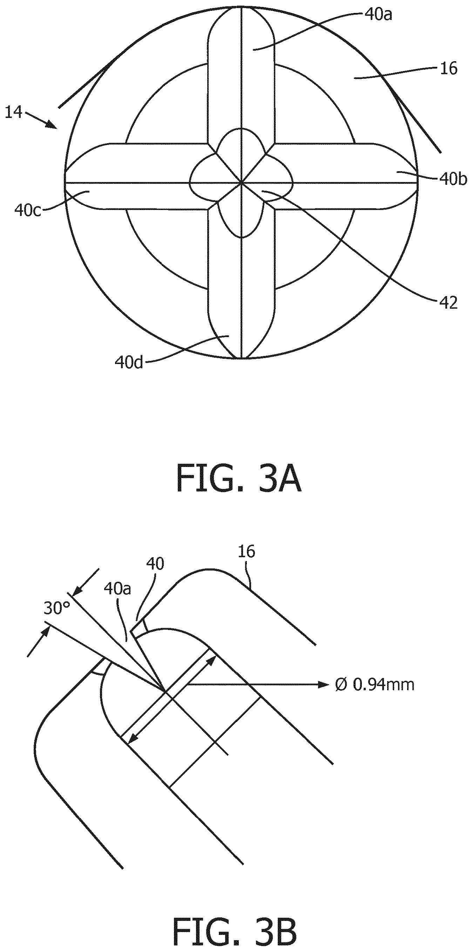

FIGS. 3A and 3B show another embodiment of the nozzle 14. FIG. 3A is a front view of a nozzle head 16 with orifices, and FIG. 3B is a cutaway side view of the nozzle head with a plurality of orifices 40a-b and 42 configured to emit a liquid for cleaning. In FIG. 3A, the orifice comprises crossing V-grooves 40a-d each configured to emit a radial sheet and which combine to form a central orifice portion 42 configured to emit a liquid jet. The V-grooves 40a-d in FIG. 3A are wider than the V-grooves 40a-d in FIG. 2C, and thus will comprise a different liquid sheet emission profile. The side cutaway view of the nozzle head portion 16 in FIG. 3B includes the wider V-groove 40a configured to emit a pressurized sheet of liquid from the liquid reservoir. According to this arrangement, the cut angle of the V-grooves in this embodiment is 30 degrees, although many other sizes and angles are possible. Pursuant to this embodiment, a fluid footprint measured on a user's teeth when the 0.49 mm² nozzle orifice is held 3 mm away from the teeth, comprises a jet with a diameter of 0.6±0.15 mm, a sheet length of 1.8±0.3 mm, and a sheet thickness 55±30 µm. These measurements can be varied by changing the cut angle of the V-grooves, the size of the jet orifice, the distance from the teeth, and other variables.

Referring to FIG. 4 is another embodiment of the nozzle 14. FIG. 4 is a front view of a nozzle head 16 with a plurality of orifices configured to emit a liquid for cleaning. The orifice comprises three V-grooves 40a-c positioned approximately 120 degrees apart and each configured to emit a radial sheet. The V-grooves meet at a central orifice portion 42 configured to emit a liquid jet. According to just one embodiment, the cut angle of the V-grooves in this embodiment is 15 degrees, although many other sizes and angles are possible. Pursuant to this embodiment, a fluid footprint measured on a user's teeth when the 0.49 mm² nozzle orifice is held 3 mm away from the teeth, comprises a jet with a diameter of 0.25±0.15 mm, a sheet length of 3.2±0.3 mm, and a sheet thickness 60±30 µm. These measurements can be varied by changing the cut angle of the V-grooves, the size of the jet orifice, the distance from the teeth, and other variables.

Referring to FIGS. 5A and 5B are two views of a head portion 16 of a nozzle member of a personal care cleaning device, comprising the nozzle embodiment of FIG. 4. The head portion is angled relative to the body portion, and comprises a connection mechanism 24 configured to removably connect the nozzle member to the nozzle member. The tip of head portion 16 comprises the orifice configuration of FIG. 4, configured to emit both a jet and one or more liquid sheets from the tip. The nozzle also comprises a hollow channel 34 configured to allow the passage of pressurized liquid and/or air from a fluid reservoir (not shown) out of the orifice 40, where it is applied to the user's dental surfaces.

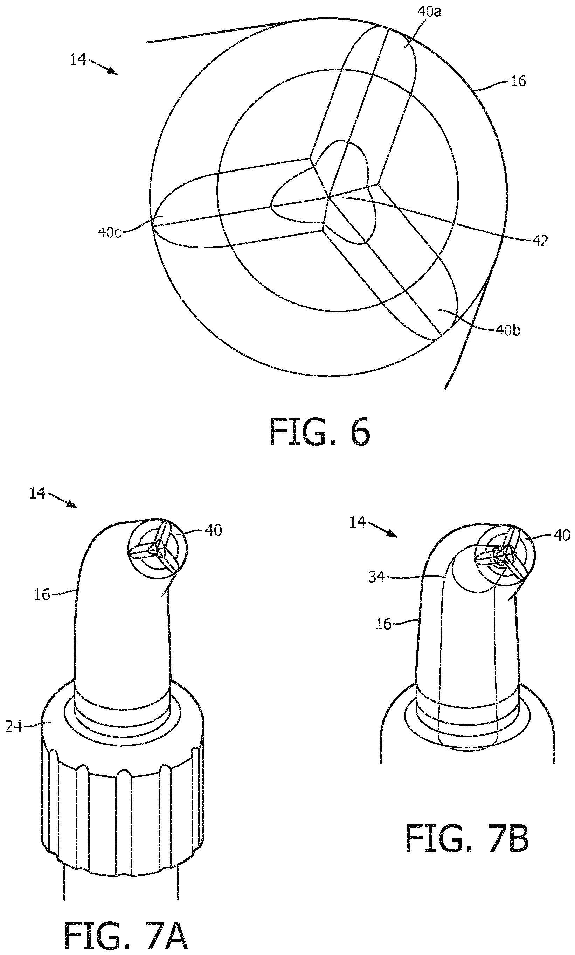

Referring to FIG. 6 is an embodiment of the nozzle 14. FIG. 6 is a front view of a nozzle head 16 with a plurality of orifices configured to emit a liquid for cleaning. The orifice comprises three V-grooves 40a-c positioned approximately 120 degrees apart and each configured to emit a radial sheet. The V-grooves meet at a central orifice portion 42 configured to emit a liquid jet. According to just one embodiment, the cut angle of the V-grooves in this embodiment is 30 degrees, although many other sizes and angles are possible. Thus, the V-grooves 40a-c in FIG. 6 are wider than the V-grooves 40a-c in FIG. 6, and thus will comprise a different liquid sheet emission profile. Pursuant to this embodiment, a fluid footprint measured on a user's teeth when the 0.49 mm² nozzle orifice is held 3 mm away from the teeth, comprises a jet with a diameter of 0.3±0.15 mm, a sheet length of 2.4±0.3 mm, and a sheet thickness 65±30 µm. These measurements can be varied by changing the cut angle of the V-grooves, the size of the jet orifice, the distance from the teeth, and other variables.

Referring to FIGS. 7A and 7B are two views of a head portion 16 of a nozzle member of a personal care cleaning device, comprising the nozzle embodiment of FIG. 6. The head portion is angled relative to the body portion, and comprises a connection mechanism 24 configured to removably connect the nozzle member to the nozzle member. The tip of head portion 16 comprises the orifice configuration of FIG. 10, configured to emit both a jet and one or more liquid sheets from the tip. The nozzle also comprises a hollow channel 34 configured to allow the passage of pressurized liquid and/or air from a fluid reservoir (not shown) out of the orifice 40, where it is applied to the user's dental surfaces.

Referring to FIG. 8A, in one embodiment, is a nozzle member 14 of a personal care cleaning device. Nozzle member 14 includes a head portion 16 at its end remote from the body portion. Head 16 comprises an orifice 40 configured to emit liquid and/or air from the device. According to an embodiment, nozzle member 14 is configured to allow the passage of pressurized liquid and/or air from a fluid reservoir (not shown) out of the orifice 40, where it is applied to the user's dental surfaces. Nozzle member 14 can be permanently or detachably mounted onto the personal care cleaning device using any connection mechanism. According to an embodiment, head 16 is angled relative to the nozzle. According to the claimed invention, the head portion 16 of nozzle member 14 comprises an extension or tip 28 that extends beyond the surface of the orifice 40. The orifice 40 is recessed within the circular tip 28, as shown in FIG. 8A. The tip 28 can be composed of any material suitable for use with a personal care device, including plastic, rubber, and other materials. The tip 28 can be rigid or soft. According to an embodiment, the tip is composed of a soft plastic or rubber for maximum comfort during use, particularly when implemented in an oral care device such that the tip will engage surfaces within the mouth. The edge of tip 28 distal from the orifice can be smooth, rounded, squared, or any other shape. For example, as shown in FIGS. 8A and 8B, the outer edge of the tip comprises a scalloped design. Additionally, the tip can flare outward as it extends outwardly from the face of the orifice 40 such that the diameter of the tip at the edge distal the orifice is larger than the diameter of the rounded tip at the interface of the tip and the nozzle. This flare is demonstrated in, for example, the side view of the nozzle head and soft tip 28 shown in FIG. 8B.

Tip 28 can be designed or configured to improve cleaning during use of the personal care device. For example, the distance that tip 28 extends beyond the face of the orifice 40 can be designed such that it is the same or substantially the same as the optimal distance for cleaning when the jet and/or liquid sheet impacts the surface to be cleaned. Additionally, the scalloped design of the tip embodiment shown in FIGS. 8A -8D, for example, can augment the removal or release of water once it impacts the surface to be cleaned. As the liquid is removed from or allowed to leave the surface quicker and more efficiently, the continuing jets and liquid streams can have a greater impact on the surface.

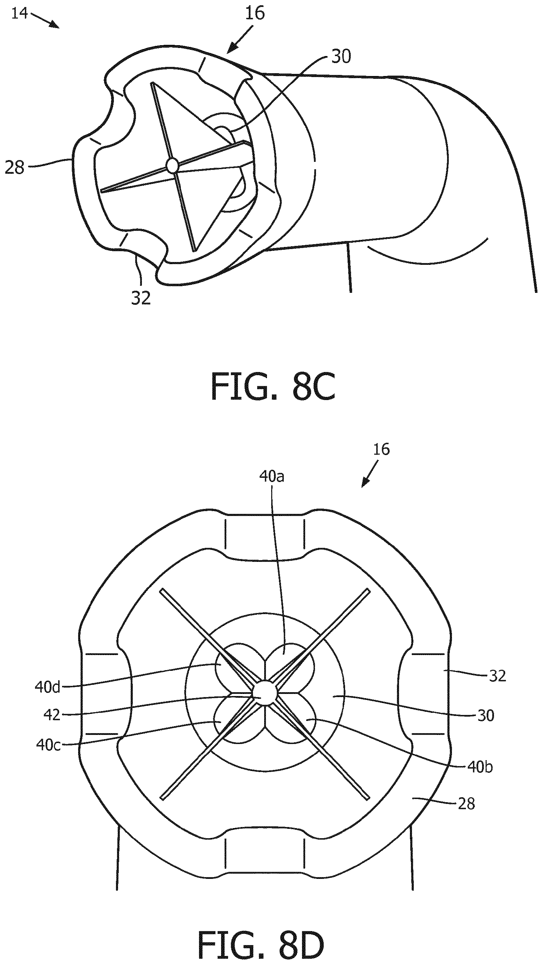

Referring to FIGS. 8C and 8D are two views of a head portion 16 of a nozzle member 14 of a personal care cleaning device, comprising the nozzle embodiment of FIGS. 8A and 8B. The head portion is angled relative to the body portion. The tip of head portion 16 comprises an orifice surface 30 with a central jet 42 configured to emit a jet of liquid and/or air and four surrounding grooves 40a-d configured to emit liquid sheets. The grooves are rounded rather than V-shaped in this embodiment. Extending from the nozzle head portion, such as from the orifice surface, is a rounded tip 28. The outer tip edge 32 of tip 28 is scalloped in this embodiment. Pursuant to this embodiment, a fluid footprint measured on a user's teeth when the 0.49 mm² nozzle orifice is held 3 mm away from the teeth, comprises a jet with a diameter of 0.45±0.15 mm, a sheet length of 2.4±0.3 mm, and a sheet thickness 65±30 µm. These measurements can be varied by changing the cut angle of the grooves, the size of the jet orifice, the distance from the teeth, the shape of the tip, and other variables.

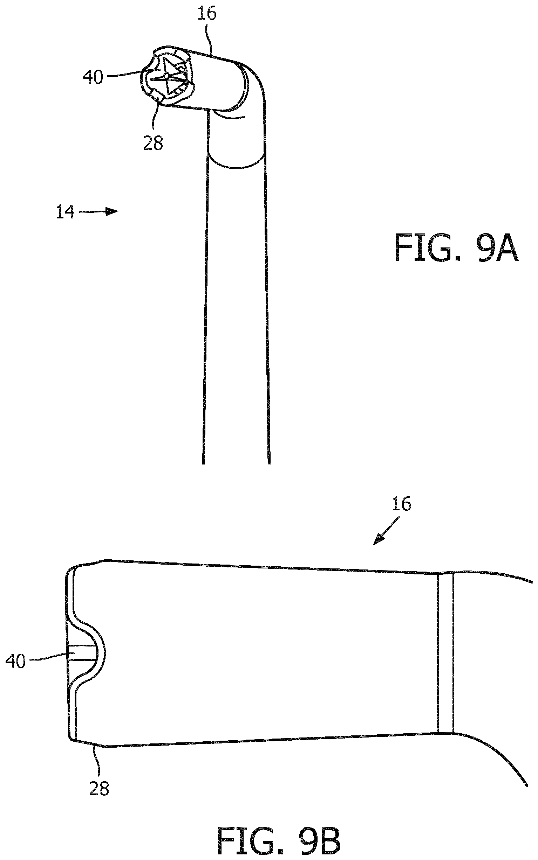

Referring to FIG. 9A, in one embodiment, is a nozzle member 14 of a personal care cleaning device. Nozzle member 14 includes a head portion 16 at its end remote from the body portion. Head 16 comprises an orifice 40 configured to emit liquid and/or air from the device. According to an embodiment, nozzle member 14 is configured to allow the passage of pressurized liquid and/or air from a fluid reservoir (not shown) out of the orifice 40, where it is applied to the user's dental surfaces. Nozzle member 14 can be detachably mounted onto the personal care cleaning device using any connection mechanism. According to an embodiment, head 16 is angled relative to the body portion.

Referring to FIG. 9B, in one embodiment, is a side view of the head portion 16 of a nozzle member of a personal care cleaning device. The head portion 16 of nozzle member 14 comprises tip 28 that extends beyond the surface of the orifice 40, which is recessed within the tip. The outer edge 32 of tip 28 comprises a scalloped design in this embodiment, although many other designs, configurations, and structures for the tip are possible. In this embodiment, compared to the embodiment depicted in FIGS. 8A-8D, for example, the tip 28 comprises less of a flare as it extends outwardly from the orifice surface.

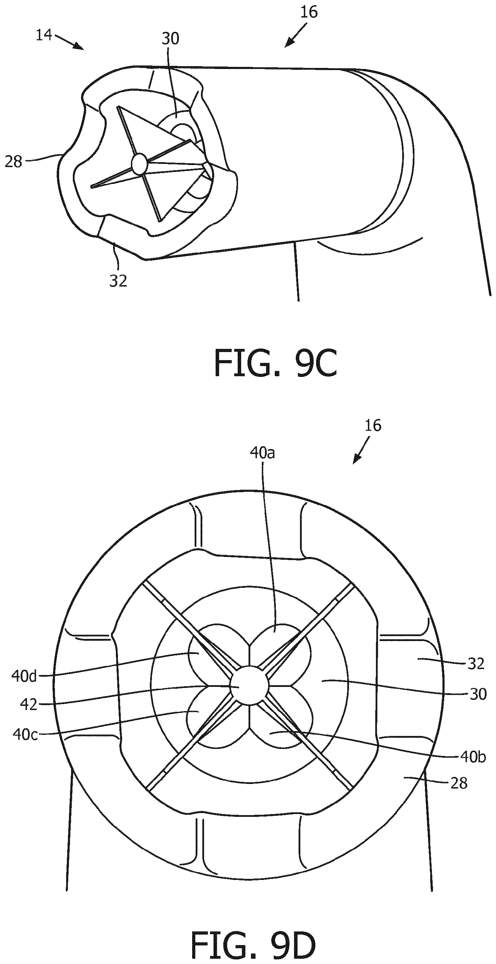

Referring to FIGS. 9C and 9D are two further views of a head portion 16 of a nozzle member of a personal care cleaning device, comprising the nozzle embodiment of FIGS. 9A and 9B. The head portion is angled relative to the body portion. The tip of head portion 16 comprises an orifice surface 30 with a central jet 42 configured to emit a jet of liquid and/or air and four surrounding grooves 40a-d configured to emit liquid sheets. The grooves are rounded rather than V-shaped in this embodiment. Extending from the nozzle head portion, such as from the orifice surface, is a rounded tip 28. The outer tip edge 32 of tip 28 is scalloped in this embodiment.

Pursuant to this embodiment, a fluid footprint measured on a user's teeth when the 0.49 mm² nozzle orifice is held 3 mm away from the teeth, comprises a jet with a diameter of 0.6±0.15 mm, a sheet length of 1.8±0.3 mm, and a sheet thickness 55±30 µm. These measurements can be varied by changing the cut angle of the grooves, the size of the jet orifice, the distance from the teeth, the shape of the tip, and other variables.

According to an embodiment, the thickness and/or length of the liquid sheets is dependent upon and/or affected by one or more geometric parameters of the shape of the orifice, the soft tip, and/or other factors. Each shape might have specific parameters associated with it. For example, the number of sheets may depend on the number of grooves, while the thickness and/or length of the sheets may depend on the cut angle of the grooves, among other factors. However, there may also be geometrical constraints that limit the type of shape that can be generated. For example, the sum of angles of a triangle is 180 degrees. According to an embodiment, for some uses on-symmetrical shapes would be less preferred, such as scalene triangles, as they would apply a rotational restriction rather than being rotationally independent.

According to another embodiment, the length of the shaped orifice may be varied to affect the size, shape, and/or number of sheets emitted by the orifice. For example, the orifice may be formed in a material comprising a thickness of approximately 0.2 to 0.5 mm, which provides at the orifice inlet a jump from large diameter to the small orifice size, which appears to be beneficial for sheet formation. However, other thicknesses are possible.

According to another embodiment, other orifice shapes that could be used are rectangular or pentagonal orifices, among others. These shapes produce sheets, but not as long as the triangular nozzles due to the larger angles. Accordingly, 4- and 5-point star nozzles may be preferred for obtaining longer sheets. The pointiness of these shapes makes the angles smaller and the sheets longer.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "having," "composed of," and the like are to be understood to be openended, i.e., to mean including but not limited to.

While several inventive embodiments have been described and illustrated herein, those of ordinary skill in the art will readily envision a variety of other means and/or structures for performing the invention, which is defined by the appended claims. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims inventive embodiments may be practiced otherwise than as specifically described.

## Claims

1. A nozzle member (14) for a personal care device (10) comprising:
a nozzle head (16) positioned at an end of the nozzle member;
an orifice (40) formed in a surface (30) of the nozzle head, wherein the orifice comprises at least one liquid jet orifice (42) each configured to emit liquid and/or air from the nozzle head in the form of a jet, and at least one liquid sheet orifice (40a-d) each configured to emit liquid and/or air from the nozzle head in the form of a sheet;
wherein the liquid sheet orifice (40a-d) comprises a groove formed in the surface (30) of the nozzle head, wherein the groove is rounded or V-shaped in cross-section,
**characterized by**
a tip (28) extending outwardly from said surface (30) of the nozzle head.

2. The nozzle member of claim 1, further comprising a channel (34) configured to allow passage of liquid and/or air from a reservoir in a body portion (12) of the personal care device to the nozzle head.

3. The nozzle member of claim 1 or 2, wherein a liquid jet orifice (42) is located in the center of the surface (30) of the nozzle head at the intersection of two or more liquid sheet orifices (40a-d).

4. The nozzle member of any of claims 1 to 3, wherein the groove is formed in the surface (30) of the nozzle head with a cut angle of between 15-30 degrees.

5. The nozzle member of any of claims 1-4, wherein the surface (30) of the nozzle head and an outer edge (32) of the tip have respective diameters, and wherein the diameter of the outer edge (32) of the tip is larger than the diameter of the surface (30) of the nozzle head.

6. The nozzle member of claim 5, wherein the outer edge (32) is scalloped.

7. The nozzle member of any of claims 1 to 6, wherein the orifice comprises a plurality of liquid sheet orifices (40a-d) each extending away from a central liquid jet orifice (42) along the surface (30) of the nozzle head.

8. A personal care device (10) comprising:
a body portion (12); and
the nozzle member (14) of any of the preceding claims, the nozzle member mountable on the body portion.

9. The personal care device of claim 8, wherein the surface (30) of the nozzle head is positioned at an angle relative to a body portion (12) of the personal care device.

## Patentansprüche

1. Düsenelement (14) für eine Vorrichtung (10) zur persönlichen Pflege, umfassend:
einen Düsenkopf (16), der an einem Ende des Düsenelements positioniert ist;
eine Drosselblende (40), die in einer Oberfläche (30) des Düsenkopfes ausgebildet ist, wobei die Drosselblende mindestens eine Flüssigkeitsstrahldrosselblende (42) umfasst, die jeweils konfiguriert ist, um Flüssigkeit und/oder Luft aus dem Düsenkopf in Form eines Strahls auszustoßen, und mindestens eine Flüssigkeitsfoliendrosselblende (40a-d), die jeweils konfiguriert ist, um Flüssigkeit und/oder Luft aus dem Düsenkopf in Form einer Folie auszustoßen;
wobei die Flüssigkeitsfoliendrosselblende (40a-d) eine in der Oberfläche (30) des Düsenkopfes ausgebildete Nut umfasst,
**gekennzeichnet durch**
eine Spitze (28), die sich von der Oberfläche (30) des Düsenkopfes nach außen erstreckt.

2. Düsenelement nach Anspruch 1, weiter umfassend einen Kanal (34), der konfiguriert ist, um einen Durchgang von Flüssigkeit und/oder Luft aus einem Reservoir in einem Körperabschnitt (12) der Vorrichtung zur persönlichen Pflege zum Düsenkopf zu erlauben.

3. Düsenelement nach Anspruch 1 oder 2, wobei eine Flüssigkeitsstrahldrosselblende (42) in der Mitte der Oberfläche (30) des Düsenkopfes an der Kreuzung von zwei oder mehr Flüssigkeitsfoliendrosselblenden (40a-d) lokalisiert ist.

4. Düsenelement nach einem der Ansprüche 1 bis 3, wobei die Nut in der Oberfläche (30) des Düsenkopfes mit einem Schnittwinkel zwischen 15-30 Grad ausgebildet ist.

5. Düsenelement nach einem der Ansprüche 1-4, wobei die Oberfläche (30) des Düsenkopfes und eine Außenkante (32) der Spitze jeweils einen entsprechenden Durchmesser aufweisen, und wobei der Durchmesser der Außenkante (32) der Spitze größer ist als der Durchmesser der Oberfläche (30) des Düsenkopfes.

6. Düsenelement nach Anspruch 5, wobei die Außenkante (32) gezackt ist.

7. Düsenelement nach einem der Ansprüche 1 bis 6, wobei die Drosselblende eine Vielzahl von Flüssigkeitsfoliendrosselblenden (40a-d) umfasst, die sich jeweils von einer zentralen Flüssigkeitsstrahldrosselblende (42) entlang der Oberfläche (30) des Düsenkopfs weg erstrecken.

8. Vorrichtung (10) zur persönlichen Pflege, umfassend:
einen Körperabschnitt (12); und
das Düsenelement (14) nach einem der vorhergehenden Ansprüche, wobei das Düsenelement an dem Körperabschnitt montiert werden kann.

9. Vorrichtung zur persönlichen Pflege nach Anspruch 8, wobei die Oberfläche (30) des Düsenkopfes in einem Winkel relativ zu einem Körperabschnitt (12) der Vorrichtung zur Körperpflege positioniert ist.

## Revendications

1. Élément de buse (14) pour un dispositif de soins personnels (10) comprenant :
une tête de buse (16) positionnée au niveau d'une extrémité de l'élément de buse ;
un orifice (40) formé dans une surface (30) de la tête de buse, dans lequel l'orifice comprend au moins un orifice de jet de liquide (42) configuré chacun pour permettre à un liquide et/ou à de l'air de sortir de la tête de buse sous la forme d'un jet, et au moins un orifice de feuille de liquide (40a-d) configuré chacun pour permettre à un liquide et/ou à de l'air de sortir de la tête de buse sous la forme d'une feuille ;
dans lequel l'orifice de feuille de liquide (40a-d) comprend une rainure formée dans la surface (30) de la tête de buse, dans lequel la rainure est arrondie ou présente une section transversale en forme de V,
**caractérisé par**
un embout (28) s'étendant vers l'extérieur depuis ladite surface (30) de la tête de buse.

2. Élément de buse selon la revendication 1, comprenant en outre un canal (34) configuré pour permettre le passage d'un liquide et/ou de l'air depuis un réservoir dans une partie de corps (12) du dispositif de soins personnels jusqu'à la tête de buse.

3. Élément de buse selon la revendication 1 ou 2, dans lequel un orifice de jet de liquide (42) est situé au centre de la surface (30) de la tête de buse au niveau de l'intersection de deux, ou plus, orifices de feuille de liquide (40a-d).

4. Élément de buse selon l'une quelconque des revendications 1 à 3, dans lequel la rainure est formée dans la surface (30) de la tête de buse avec un angle de coupe compris entre 15-30 degrés.

5. Élément de buse selon l'une quelconque des revendications 1-4, dans lequel la surface (30) de la tête de buse et un bord externe (32) de l'embout présentent des diamètres respectifs et dans lequel le diamètre du bord externe (32) de l'embout est plus important que le diamètre de la surface (30) de la tête de buse.

6. Élément de buse selon la revendication 5, dans lequel le bord externe (32) est festonné.

7. Élément de buse selon l'une quelconque des revendications 1 à 6, dans lequel l'orifice comprend une pluralité d'orifices de feuille de liquide (40a-d), chacun s'étendant à l'opposé d'un orifice de jet de liquide central (42) le long de la surface (30) de la tête de buse.

8. Dispositif de soins personnels (10), comprenant :
une partie de corps (12) ; et
l'élément de buse (14) selon l'une quelconque des revendications précédentes, l'élément de buse pouvant être monté sur la partie de corps.

9. Dispositif de soins personnels selon la revendication 8, dans lequel la surface (30) de la tête de buse est positionnée à un angle par rapport à une partie de corps (12) du dispositif de soins personnels.
